Europäisches Patentamt

European Patent Office

Office européen des brevets

(11) Publication number: **0 399 600**
**A1**

## EUROPEAN PATENT APPLICATION

(21) Application number: **90201248.3**

(22) Date of filing: **16.05.90**

(51) Int. Cl.5: **B44C 3/08, C08J 7/04,
C08J 9/36**

(30) Priority: **25.05.89 NL 8901315**

(43) Date of publication of application:
**28.11.90 Bulletin 90/48**

(84) Designated Contracting States:
**AT BE CH DE DK ES FR GB GR IT LI LU NL SE**

(71) Applicant: **STORK X-CEL B.V.
Wim de Körverstraat 43a
NL-5831 AN Boxmeer(NL)**

(72) Inventor: **Van Bakel, Albertus Bernardus
Petrus
2, Meidoorn
NL-5708 DH Stiphout(NL)**

(74) Representative: **Barendregt, Drs. F. et al
EXTERPATENT B.V. P.O. Box 90649
NL-2509 LP 's-Gravenhage(NL)**

(54) **Process for manufacturing a product composed of polyurethane layers.**

(57) In the process a web-shaped release medium is used in the product at least the top layer comprises a decorative embossment and said top layer is obtained starting from a solution of a suitable polyurethane composition and the base layer adjacent to the top layer is fed as a porous polyurethane film during the manufacture of the product. According to the invention a solution of a polyurethane composition is deposited on the release medium (3, 6), which solution is then dried to a solids content such that the layer dried in this manner is still sticky and the porous polyurethane film base layer (1) is joined by lamination to said still sticky polyurethane composition layer (2) deposited previously, after which the assembly thus obtained is dried. The invention also relates to a thus obtained product.

FIG. 2.

EP 0 399 600 A1

The present application relates to a process for manufacturing a product composed of polyurethane layers using a web-shaped release medium, in which product at least the top layer comprises a decorative embossment, and the top layer is obtained starting from a solution of a suitable polyurethane composition and the base layer adjacent to the top layer is fed as a porous polyurethane film during the manufacture of the product.

Such a process is generally known and is, in general, carried out in the following manner.

The starting point is a polyurethane film. Said polyurethane film is manufactured by extruding a solution containing salt crystals and coagulating the solution.

After washing out with water to remove the salt, a pore-containing polyurethane film is obtained. A layer of polyurethane solution having a solids content of, for example, 20% is deposited on said film by coating.

Then a release medium is applied to the polyurethane film solution layer by lamination under high pressure, after which the assembly obtained is dried.

The release medium will generally be a grained release medium in order to provide the polyurethane top layer with an embossment.

This process has, however, a number of disadvantages. The solvent from the liquid top layer may dissolve the surface of the polyurethane film to some extent, as a result of which the final product becomes harder and loses thickness and the water vapour permeability decreases.

Moreover the solvent in the top layer can evaporate only through the film in the direction of the lower side since the release medium is situated at the upper side, and this requires longer drying times.

The object of the present invention is to provide a solution to the abovementioned disadvantages and is characterized in that a solution of a polyurethane composition is deposited on the release medium, which solution is then dried to a solids content such that the layer dried in this manner is still sticky and the porous polyurethane film base layer is joined by lamination to said still sticky polyurethane composition deposited previously, after which the assembly thus obtained is dried.

This process has the characteristic that the top layer is dried to a solids content such that it is no longer capable of dissolving the surface of the polyurethane film base layer, as a result of which the final product obtained is flexible and water-vapour permeable, while the drying times are appreciably shorter than is the case in the process which was the starting point. Also the final product is smoother because the liquid top layer is deposited on the release medium instead of on the porous polyurethane film base layer. The thickness of the polyurethane film obtained by coagulation may in fact be non-uniform, with the result that a uniform final product can often not be obtained with the process according to the prior art.

It will be obvious that the laminate formed in the process of the invention can be stored or transported as such and that before or after further treatment the release medium is removed from the laminate.

Expediently, a release medium containing a decorative embossment is used. If the release medium contains a decorative embossment, this embossment structure is transferred to the top layer during the manufacture of the product composed of polyurethane layers, which provides an aesthetic effect in the final product.

A smooth release medium may also be used on which an effect layer forming a decorative embossment is deposited prior to depositing the solution of the polyurethane composition, which effect layer is completely dried, the effect layer also being composed of a solution of a polyurethane composition.

The use of an effect layer results in an identical aesthetic effect and the release medium can be used more often as a result. In the case of a smooth release medium, it is not necessary, as in the case of a grained release medium, for the decorative embossment to be pulled out of the polyurethane layer, and this means a reduced wear and a longer service life of the release medium.

An additional treatment such as printing and lacquering is superfluous as a result of the presence of the effect layer. Said effect layer has a wear resistance which is many times better than that of a top layer which is provided with a decorative layer by a release medium, whereafter the latter is protected by lacquering.

With particular advantage, the solids content of the polyurethane composition containing a solvent for the effect layer and the top layer is approximately 20%, and the effect layer is deposited in an amount of 0.1-5 $g/m^2$ dry solid and the top layer is deposited in an amount of 10-20 $g/m^2$ dry solid. The polyurethane base layer preferably has a surface weight of up to approximately 200 $g/m^2$. It will be clear that these are only preferred contents and amounts and that, if desired, other contents and amounts can be used.

As a result of using the abovementioned contents and amounts of dry solid, an excellent product composed of polyurethane layers is obtained which has all the characteristics.

With very great advantage, the effect layer is completely dried at 125-150° C after depositing it on the release medium, the top layer is dried at approximately 60° C to a solids content of approximately 60% after being deposited, and the assembly is dried at 150° C after laminating the polyurethane film base layer.

Using the respective drying steps eliminates the disadvantage that the subsequent polyurethane layer to be applied is dissolved by the previous layer because the latter still contains too much solvent. This has the result that the final product has a good water-vapour permeability and that, compared with the prior art, a thinner polyurethane film base layer can be used. In addition, comparatively shorter drying times are necessary in the present process than in the process according to the prior art because the top layer has already been dried to a solids content of 60% before the deposition of the porous polyurethane film base layer. In the absence of the polyurethane film base layer, the polyurethane solution of the top layer obviously dries more rapidly.

The present invention also relates to a laminated polyurethane film which is characterized in that the laminated polyurethane film is a polyurethane film which is manufacutured according to the invention and which has been removed from the web-shaped release medium.

The present invention will be explained below with reference to the accompanying drawing, wherein:

Figure 1 shows a section through a product composed of polyurethane layers with a release medium provided with a decorative embossment thereon, which product is manufactured according to the prior art,

Figure 2 shows a section through a product composed of polyurethane layers with one and the same release medium, which product is manufactured according to the invention,

Figure 3 illustrates a section through a product according to the invention in which a release medium without decorative embossment is present and also an effect layer forming a decorative embossment.

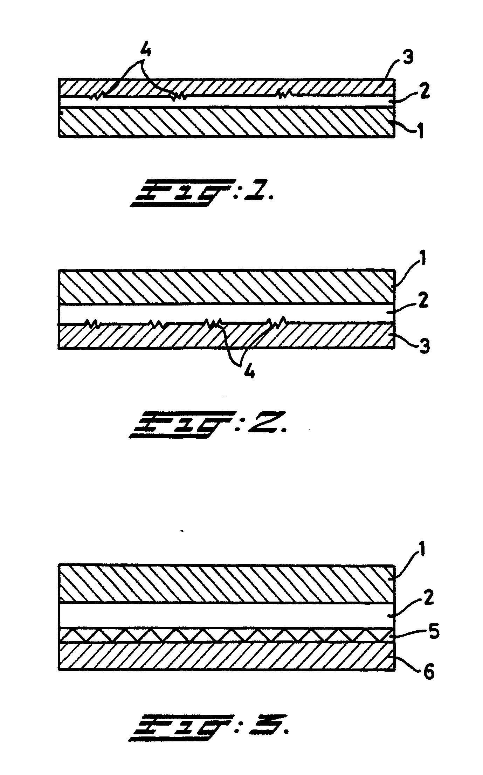

In Figure 1, reference numeral 1 indicates the coagulated porous polyurethane film, 2 the polyurethane top layer and 3 the release medium. In this case, 4 indicates a number of grains of the decorative embossment. According to the prior art, the release medium has to be laminated onto the top layer under high pressure, and this presents a risk of damage to the release medium itself and also to the water-vapour permeability of the polyurethane film base layer 1, and may adversely affect the flexibility of the final product.

The laminate shown here is manufactured by depositing a polyurethane solution layer on the porous polyurethane film, for example by reverse roll coating; then the release medium layer is deposited with the aid of a roll laminator.

Figure 2 shows the product which is manufactured according to the present invention in which the polyurethane film base layer is deposited last, as a result of which high pressure does not have to be applied during the manufacture in order to transfer the decorative embossment 4 of the release medium 3 to the top layer 2 since the top layer 2 is deposited in liquid form on the decorative embossment.

The top layer 2 can be deposited by means of reverse roll coating; use may also advantageously be made of rotary screen printing.

For the last possibility, use is preferably made of a nickel seamless rotary screen-printing stencil in a suitable apparatus.

This process protects the polyurethane film base layer against the abovementioned disadvantageous consequences which are associated with the solvent which is used to form the polyurethane solution.

A very attractive embodiment is shown in Figure 3 in which a smooth release medium 6 is present on which an effect layer 5 is first of all deposited which takes over the effect of the grains 4 of the decorative embossment of the release medium 3 from Figure 2. This means that the release medium can be used much more often than in the case of a release medium having a decorative embossment according to the prior art. A product according to Figure 3 also requires no final treatment such as printing or lacquering since the effect layer 5 can be of stronger and more wear-resistant construction than a lacquered top layer 2 provided with a decorative embossment.

The process according to the present invention makes it possible to produce excellent products composed of polyurethane layers which have better characteristics than the products which are composed of polyurethane layers and which have been manufactured by processes according to the prior art.

## Claims

1. Process for manufacturing a product composed of polyurethane layers using a web-shaped release medium, in which product at least the top layer comprises a decorative embossment and said top layer is obtained starting from a solution of a suitable polyurethane composition and the base layer adjacent to the top layer is fed as a porous polyurethane film during the manufacture of the product, characterized in that a solution of a polyurethane composition is deposited on the release medium (3, 6), which solution is then dried to a solids content such that the layer dried in this manner is still sticky and the porous polyurethane film base layer (1) is joined by lamination to said still sticky polyurethane composition layer (2) deposited previously, after which the assembly thus obtained is dried.

2. Process according to Claim 1, characterized in that a release medium (3) containing a decorative embossment is used.

3. Process according to Claim 1, characterized in that a smooth release medium (6) is used on which an effect layer (5) forming a decorative embossment is deposited prior to depositing the solution of the polyurethane composition, which effect layer is completely dried, the effect layer (5) also being composed of a solution of a polyurethane composition.

4. Process according to Claim 1 and 3, characterized in that the solids content of the polyurethane composition containing solvent for the effect layer (5) and the top layer (2) is approximately 20%.

5. Process according to Claim 3 and 4, characterized in that the effect layer (5) is deposited in an amount of 0.1-5 g/m$^2$ dry solid.

6. Process according to Claim 1, characterized in that the top layer (2) is deposited in an amount of 10-20 g/m$^2$ dry solid.

7. Process according to Claim 1, characterized in that the porous polyurethane film base layer (1) has a surface weight of up to approximately 200 g/m$^2$.

8. Process according to Claim 3-5, characterized in that, after depositing the effect layer (5) on the release medium (3, 6), it is completely dried at 125-150° C.

9. Process according to Claim 1, characterized in that, after depositing the top layer (2), it is dried at approximately 60° C to a solids content of approximately 60%.

10. Process according to Claim 1, characterized in that, after laminating the porous polyurethane film base layer (1), the assembly is dried at 150° C.

11. Laminated polyurethane film, characterized in that the laminated polyurethane film is a polyurethane film which has been manufactured according to one or more of Claims 1-8 and which has been removed from the web-shaped release medium (3, 6).

FIG:1.

FIG:2.

FIG:3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 325 928 (INMONT CORP.) <br> * Page 5, lines 22-44; page 7, line 90 - page 8, line 3; page 8, lines 47-68; page 9, lines 4-17 * | 1 | B 44 C 3/08 <br> C 08 J 7/04 <br> C 08 J 9/36 |
| Y | EP-A-0 013 731 (METZELER SCHAUM) <br> * Page 3, whole page * | 1 | |
| A | US-A-3 821 012 (C.J. LATTARULO) <br> * Column 4, line 61 - column 5, line 7 * | 1 | |
| A | US-A-3 648 358 (D.L. CANNADY) <br> * Column 1, line 65 - column 2, line 34 * | 2 | |
| A | EP-A-0 210 619 (L. KURZ) <br> * Claims 1-4 * | 4 | |

**TECHNICAL FIELDS SEARCHED (Int. Cl.5)**

B 44 C
C 08 J

The present search report has been drawn up for all claims

| Place of search | Date of completion of the search | Examiner |
|---|---|---|
| THE HAGUE | 14-08-1990 | FRIDEN N. |